# EUROPÄISCHE PATENTSCHRIFT

(11) **EP 4 264 024 B1**
(45) Veröffentlichungstag und Bekanntmachung des Hinweises auf die Patenterteilung: **19.03.2025**
(21) Anmeldenummer: 21805868.3
(22) Anmeldetag: 28.10.2021
(51) Int. Cl.: F01N 3/00

(54) **REINIGUNGSVORRICHTUNG UND VERFAHREN ZUM REINIGEN EINER FILTERANORDNUNG**
CLEANING DEVICE AND METHOD FOR CLEANING A FILTER ARRANGEMENT
DISPOSITIF DE NETTOYAGE ET PROCÉDÉ DE NETTOYAGE D'UN AGENCEMENT DE FILTRE

(30) Priorität: 15.12.2020 DE 102020133470
(43) Veröffentlichungstag der Anmeldung: 25.10.2023
(73) Patentinhaber: Mack GmbH, 74638 Waldenburg (DE)
(72) Erfinder: DIETRICH, Marco, 74523 Schwäbisch-Hall (DE); MACK, Walter, 74535 Mainhardt (DE)
(74) Vertreter: Witte, Weller & Partner Patentanwälte mbB
(86) Internationale Anmeldenummer: PCT/EP2021/080025
(87) Internationale Veröffentlichungsnummer: WO 2022/128226

(56) Entgegenhaltungen:
- EP-A1- 3 412 355
- WO-A1-2013/056378
- DE-A1- 102015 112 939
- DE-T2- 60 037 220

## Beschreibung

Die vorliegende Erfindung betrifft eine Reinigungsvorrichtung zum Reinigen einer Filteranordnung, die einen ersten Fluidanschluss, einen zweiten Fluidanschluss und eine Filtereinrichtung aufweist, die zwischen dem ersten und dem zweiten Fluidanschluss angeordnet ist und die eine Oberfläche hat, an der Verunreinigungen anhaften können, mit einer Generatorvorrichtung zur Erzeugung eines Gas-Flüssigkeitsgemisches, wobei die Generatorvorrichtung eine Aufnahmekammer zur Aufnahme einer Flüssigkeit und eine Druckgaserzeugungsvorrichtung aufweist, die mit der Aufnahmekammer verbindbar ist, mit einer ersten Rohranordnung, die mit der Generatorvorrichtung verbunden ist und die einen ersten Rohranschluss aufweist, der mit dem ersten Filteranschluss verbindbar ist, um das Gas-Flüssigkeitsgemisch unter Druck in die Filteranordnung zu leiten, und mit einer zweiten Rohranordnung, die einen mit dem zweiten Filteranschluss verbindbaren zweiten Rohranschluss aufweist und die mit einer Auffangvorrichtung zum Auffangen des durch die Filteranordnung geleiteten Gas-Flüssigkeitsgemisches und von aus der Filteranordnung mitgerissenen Verunreinigungen verbunden ist.

Ferner betrifft die vorliegende Erfindung ein Verfahren zum Reinigen einer Filteranordnung der oben bezeichneten Art, wobei das Verfahren die Schritte aufweist: Anordnen der Anordnen der Filteranordnung in einer Reinigungsvorrichtung, zumindest teilweises Befüllen der Aufnahmekammer mit einer Flüssigkeit, und Erzeugen eines Reinigungsimpulses, bei dem Gas aus der Druckgaserzeugungseinrichtung unter Druck in die Aufnahmekammer geleitet wird, so dass ein Gas-Flüssigkeitsgemisch durch die Filtereinrichtung hindurch und aus dem zweiten Fluidanschluss heraus getrieben wird.

Aus dem Dokument DE 10 2015 112 939 A1 ist ein Dieselpartikelfilter-Reinigungsverfahren und eine entsprechende Vorrichtung bekannt. Hierbei wird ein Dieselpartikelfilter oberhalb einer Aufnahmekammer für eine Flüssigkeit angeordnet. Die Aufnahmekammer wird mit der Flüssigkeit teilweise befüllt. Anschließend wird ein Gas unter Druck in die Aufnahmekammer geleitet, und zwar von unterhalb der Oberfläche der Flüssigkeit, so dass ein Gas-Flüssigkeitsgemisch erzeugt wird, das durch den Druck über den ersten Fluidanschluss durch die Filtereinrichtung hindurch und aus dem zweiten Fluidanschluss heraus getrieben wird.

Die Filteranordnung wird so oberhalb der Aufnahmekammer angeordnet, dass der erste Fluidanschluss hin zu der Aufnahmekammer weist. Im eingebauten Zustand der Filteranordnung weist der erste Fluidanschluss hin zu der Abgasseite. Der zweite Fluidanschluss hingegen ist jener, der im eingebauten Zustand der Filteranordnung dem Dieselmotor zugewandt ist. Hierdurch kann erreicht werden, dass die in der Filtereinrichtung vorhandenen Verunreinigungen gegen die Betriebs-Durchströmungsrichtung der Filteranordnung aus der Filtereinrichtung hinaus getrieben werden, also in dem Stand der Technik von unten nach oben.

Die dem Dieselmotor im eingebauten Zustand zugewandte Seite der Filtereinrichtung (an dem zweiten Fluidanschluss) wird typischerweise vor dem Einbau in die Reinigungsvorrichtung oberflächlich gereinigt, bspw. mittels eines Hochdruckreinigungsgerätes oder dergleichen. Hierdurch kann anhaftende Asche und dergleichen, insbesondere im Bereich eines Flansches des zweiten Fluidanschlusses gereinigt bzw. abgespült werden, bevor die Filteranordnung in die oben genannte Reinigungsvorrichtung eingesetzt wird. Da diese Vor-Reinigung nur oberflächlich erfolgt, setzt sich während dieses Vorganges keine Flüssigkeit im Inneren der Filtereinrichtung ab.

Hierdurch wird der besondere Vorteil erzielt, dass bei der anschließenden Reinigung mittels des Reinigungsimpulses das Gas-Flüssigkeitsgemisch in Form eines Gemisches aus Gas- und Wassertröpfchen (Aerosol-Mischung) durch die Filtereinrichtung hindurch getrieben wird, so dass die kinetische Energie der Tröpfchen, die mit hoher Geschwindigkeit durch die Filtereinrichtung hindurchgedrückt werden, die anhaftenden Verunreinigungen effizient lösen und austragen können, wie es auch in dem oben genannten Dokument DE 10 2015 112 939 A1 beschrieben worden ist.

Hierbei ist auch wichtig, dass der zweite Fluidanschluss, über den das Gas-Flüssigkeitsgemisch heraus getrieben wird, entweder vollkommen offen ist oder aber mit einer Auffangvorrichtung verbunden ist, die ein sehr großes Volumen hat, also ein Eintreten des Gas-Flüssigkeitsgemisches mit möglich wenig Gegendruck ermöglicht.

Es sind ferner Dokumente im Stand der Technik bekannt, bei denen oberhalb der Filteranordnung eine Aufnahmekammer angeordnet ist, in die eine Reinigungsflüssigkeit eingefüllt wird, wobei die Flüssigkeit dann ungehindert in die Filtereinrichtung strömt, bis die Filtereinrichtung vollständig gefüllt ist und oberhalb der Filtereinrichtung in der Aufnahmekammer ein Flüssigkeitsvolumen vorhanden ist. Anschließend wird von oberhalb des Flüssigkeitspegels Gas in die Aufnahmekammer eingeleitet, so dass das in der Filtereinrichtung vorhandene Fluid nach unten unter Druck heraus gedrückt wird. Eine derartige Reinigungsanordnung ist aus dem Dokument US 8,273,185 B2 bekannt.

Aus dem Dokument EP 1 336 729 A1 ist eine Vorrichtung zum Entfernen von Rückständen aus dem Filterkörper eines Partikelfilters bekannt. Hierbei wird in einer ersten Stufe ein flüssiges Spülmittel in den Partikelfilter gefüllt und in einer weiteren Stufe der Filterkörper des Partikelfilters entgegen seiner Filterrichtung von einem gasförmigen Spülmedium durchströmt. Das flüssige Spülmittel ruht, nachdem der Partikelfilter mit ihm aufgefüllt worden ist, ein vorgegebenes Zeitintervall. Nach Ablauf des Zeitintervalls setzt schlagartig die Zufuhr des gasförmigen Spülmediums ein. Das Gas wird dabei von oben nach unten in das Partikelfilter eingeleitet.

Aus dem Dokument US 2004/0045439 A1 ist ein Reinigungsverfahren für Partikelfilter bekannt, wobei eine stromaufliegende Seite (also die Seite, die dem Dieselmotor im Betrieb zugewandt ist) zunächst mittels eines Brenners behandelt wird, um Versottungen auf der Stromaufseite der Filtereinrichtung zu verbrennen.

Anschließend wird die Filteranordnung von dieser ersten Reinigungseinrichtung abgenommen und in eine zweite Reinigungsanordnung eingespannt. Hierbei wird in die stromabliegende Fläche der Filtereinrichtung ein Flüssigkeitsstrom eingeleitet, und zwar mit einer Strömungsrate von mehr als 50 l/min. Hierzu wird zunächst in einer Auffangkammer ein Reinigungsfluid erwärmt. Ferner ist ein separater Drucklufttank vorgesehen, der einen Druckbereich von 2 bar bis 6 bar abgeben kann. Der Drucklufttank und die Auffangkammer sind über Ventile mit einem Kanal verbunden, der hin zu der stromabliegenden Seite der Filteranordnung führt. Die Ventile sind so geschaltet, dass sie abwechselnd Reinigungsflüssigkeit oder Luft zuführen können.

Es ist vor diesem Hintergrund eine Aufgabe der Erfindung, eine verbesserte Reinigungsvorrichtung und ein verbessertes Reinigungsverfahren zum Reinigen einer Filteranordnung, insbesondere eines Dieselpartikelfilters anzugeben.

Die obige Aufgabe wird durch eine Reinigungsvorrichtung gemäß Anspruch 1 gelöst. Vorzugsweise ist dabei der erste Rohranschluss in Richtung der Schwerkraft oberhalb des zweiten Rohranschlusses angeordnet, wobei die erste Rohranordnung einen Umlenkrohrabschnitt aufweist, der die Aufnahmekammer der Generatorvorrichtung mit dem ersten Rohranschluss verbindet, derart, dass die Aufnahmekammer vor Erzeugen des Gas-Flüssigkeitsgemisches mit Flüssigkeit gefüllt werden kann, ohne dass die Flüssigkeit in die Filteranordnung gelangt.

Hierdurch kann das gleiche vorteilhafte Reinigungskonzept angewendet werden, wie es in dem Dokument DE 10 2015 112 939 A1 beschrieben worden ist. Allerdings wird das Gas-Flüssigkeitsgemisch bei der erfindungsgemäßen Reinigungsvorrichtung von oben nach unten durch die Filtereinrichtung hindurch geleitet. In der Reinigungsvorrichtung wird die Filteranordnung folglich so angeordnet, dass der zweite Fluidanschluss, bei dem es sich um den stromaufseitigen (dem Dieselmotor zugewandten) Anschluss der Filteranordnung handelt, unten ist, also in Schwerkraftrichtung unterhalb des ersten Fluidanschlusses. Auch bei der vorliegenden Reinigungsvorrichtung wird die Filteranordnung folglich im Gegenstrom-Prinzip gereinigt, indem das Gas-Flüssigkeitsgemisch entgegen der normalen Filterrichtung durch die Filtereinrichtung hindurch geleitet wird.

Die Auffangvorrichtung zum Auffangen des durch die Filteranordnung hindurch geleiteten Gas-Flüssigkeitsgemisches ist so ausgebildet, dass sie entweder ein sehr großes Volumen hat oder ein elastisch ausdehnbares Volumen hat, so dass das Gas-Flüssigkeitsgemisch im Wesentlichen ungehindert durch die Filtereinrichtung hindurch getrieben werden kann.

Bei der Reinigungsvorrichtung ist es vorteilhaft, wenn die erste Rohranordnung so aufgebaut ist, dass das von der Generatorvorrichtung erzeugte Gas-Flüssigkeitsgemisch unter Druck gegen die Schwerkraft nach oben, dann durch den Umlenk-Rohrabschnitt hindurch und schließlich nach unten in Richtung der Filteranordnung auf den ersten Fluidanschluss geführt wird.

Das Einleiten des Gases in die Aufnahmekammer erfolgt vorzugsweise ebenfalls unterhalb des Flüssigkeitsniveaus in der Aufnahmekammer, vorzugsweise in einem Bereich des unteren Drittels der Flüssigkeit, gesehen in der Schwerpunktrichtung.

Auch bei der vorliegenden Reinigungsvorrichtung ist es von Vorteil, dass Filtereinrichtung im Wesentlichen trocken ist, jedenfalls nicht mit Flüssigkeit gefüllt ist, bevor das Gas-Flüssigkeitsgemisch unter Druck durch die Filtereinrichtung hindurch getrieben wird. Hinsichtlich der hierdurch erzielbaren Vorteile wird verwiesen auf die Offenbarung des Dokumentes DE 10 2015 112 939 A1, deren gesamter Offenbarungsgehalt vorliegend durch Bezugnahme enthalten ist. Insbesondere die Angaben zu der Anzahl der Reinigungsimpulse, den Temperaturen, dem Volumen der Aufnahmekammer, dem Volumen der Filteranordnung, der Art der Reinigungsflüssigkeit, etc., können identisch realisiert werden wie in dem genannten Dokument.

Von Vorteil ist bei der erfindungsgemäßen Reinigungsvorrichtung insbesondere auch, dass die Oberfläche der Filtereinrichtung auf der Seite des zweiten Fluidanschlusses über die zweite Rohranordnung vorbehandelt, insbesondere vorgereinigt werden kann, ohne dass es notwendig ist, die Filteranordnung umzuspannen. Mit anderen Worten kann die Filteranordnung in der Reinigungsvorrichtung vollständig gereinigt werden, während sie zwischen dem ersten Rohranschluss und dem zweiten Rohranschluss angeordnet ist.

Die Vorreinigung der unteren Seite der Filtereinrichtung auf der Seite des zweiten Fluidanschlusses kann beliebig erfolgen. Beispielsweise kann die Vorreinigung eine Verbrennung beinhalten.

Gemäß der Erfindung ist in der zweiten Rohranordnung eine Fluid-Sprühvorrichtung angeordnet ist, die wenigstens eine Sprühdüse aufweist, die auf die Filtereinrichtung gerichtet ist.

Mittels der Fluid-Sprühvorrichtung kann die Oberfläche der Filtereinrichtung auf der Seite des zweiten Fluidanschlusses vorgereinigt werden, und zwar durch das Aufsprühen eines Sprühfluides, bei dem es sich um Wasser handeln kann. Dem Sprühfluid kann jedoch auch ein Reinigungsmittel zugemischt werden, das seifenartig sein kann.

Es ist nicht ausgeschlossen, das Sprühfluid in das Innere der Filtereinrichtung gelangt. Aufgrund der Anordnung der Filteranordnung mit dem zweiten Fluidanschluss unterhalb des ersten Fluidanschlusses (in Schwerkraftrichtung gesehen) fließt jedoch das eindringende Sprühfluid immer gleich nach unten ab, und zwar in Richtung der zweiten Rohranordnung.

Die Fluid-Sprühvorrichtung ist vorzugsweise so ausgebildet, dass sie nicht nur die Oberfläche der Filtereinrichtung abreinigen kann, sondern auch einen Umfangsbereich hiervon, insbesondere einen Bereich eines Flanschabschnittes, innerhalb dessen sich ebenfalls Verunreinigungen wie Asche, Ruß etc. ansammeln können. Mittels der Fluid-Sprühvorrichtung kann die Filteranordnung im Bereich des zweiten Fluidanschlusses folglich vorab so gereinigt werden, dass nach der anschließenden Reinigung mittels des Gas-Flüssigkeitsgemisches keine weitere Nachreinigung erforderlich ist.

Die Sprühdüse sprüht das Sprühfluid folglich vorzugsweise entgegen der Schwerkraft nach oben gegen die Seite der Filtereinrichtung und in dessen Umfangsbereich.

Von besonderem Vorzug ist es, wenn die Fluid-Sprühvorrichtung einen Sprühbalken aufweist, der sich quer zu einer Längsrichtung erstreckt und an dem eine Mehrzahl von Sprühdüsen angeordnet ist.

Ferner ist es vorteilhaft, wenn die Sprühvorrichtung um eine Längsachse rotierbar ist.

Hierdurch kann, ähnlich wie bei einer Geschirrspülmaschine, eine hohe Reinigungswirkung aus vielen Richtungen erzeugt werden, so dass eine hervorragende Vorreinigung erzielbar ist.

Die zweite Rohranordnung weist vorzugsweise einen siphon-artigen Rohrabschnitt auf, in dem sich Sprühfluid und Verunreinigungen sammeln können, die mittels der Fluid-Sprühvorrichtung von der Filtereinrichtung abgelöst sind.

Hierdurch kann erreicht werden, dass das Sprühfluid nicht notwendigerweise in die anschließende Auffangvorrichtung gelangt, insbesondere nicht anschließend durch das in die zweite Rohranordnung einströmende Gas-Flüssigkeitsgemisch in Richtung der Auffangvorrichtung mitgerissen wird.

Von besonderem Vorzug ist es vielmehr, wenn der siphon-artige Rohrabschnitt einen Abfluss aufweist, über den Sprühfluid und Verunreinigungen aus der zweiten Rohranordnung entfernt werden können.

Der Abfluss ist vorzugsweise in einem unteren Bereich des siphon-artigen Rohrabschnittes angeordnet, so dass nach der Vorreinigung mittels der Fluid-Sprühvorrichtung im Wesentlichen keine großen Mengen an durch die Vorreinigung abgelösten Verunreinigungen in dem siphon-artigen Rohrabschnitt befinden.

Dies ist vorteilhaft, denn die mittels der Fluid-Sprühvorrichtung gelösten Verunreinigungen sind häufig rußartig oder beinhalten rußartige Komponenten, die vorzugsweise anders behandelt werden hinsichtlich der Nachbehandlung bzw. Wiederaufbereitung, als das Gas-Flüssigkeitsgemisch.

Ferner ist es vorteilhaft, wenn wenigstens ein Abschnitt der ersten Rohranordnung in einer Längsrichtung verschieblich ist, um ein Einsetzen der Filteranordnung zwischen dem ersten Rohranschluss und dem zweiten Rohranschluss zu erleichtern.

Der Abschnitt der ersten Rohranordnung kann dabei manuell in Längsrichtung verschieblich sein. Die Längsrichtung ist vorzugsweise parallel zur Schwerkraftrichtung.

Von besonderem Vorzug ist es, wenn der ersten Rohranordnung ein erster Verstellmotor zugeordnet ist, mittels dessen der wenigstens eine Abschnitt der ersten Rohranordnung verschiebbar ist, und zwar in der Längsrichtung.

Der erste Verstellmotor ist vorzugsweise ein Elektromotor, der bspw. über eine Spindel und vorzugsweise über ein Winkelgetriebe wenigstens eine Hubstange antreibt, mittels eine Hubplatte in Längsrichtung verschieblich ist, an der der wenigstens eine Abschnitt der ersten Rohranordnung festgelegt ist, insbesondere die gesamte erste Rohranordnung.

Dabei ist es von besonderem Vorteil, wenn der erste Rohranschluss mittels des ersten Verstellmotors kraftgesteuert auf den ersten Filteranschluss aufsetzbar ist.

Die Kraftsteuerung kann dabei über eine geeignete Software erfolgen, so dass der erste Verstellmotor entsprechend angesteuert wird. Generell kann jedoch zwischen einem Antriebsglied des ersten Verstellmotors und der ersten Rohranordnung auch eine Federanordnung angeordnet werden, um den ersten Rohranschluss kraftgesteuert auf den ersten Filteranschluss aufsetzen zu können.

Gemäß einer weiteren insgesamt bevorzugten Ausführungsform beinhaltet die Reinigungsvorrichtung eine Beladeanordnung, die in einer Richtung quer zu einer Längsrichtungsachse verschiebbar ist, um eine Filteranordnung in einer Reinigungsposition oberhalb des zweiten Rohranschlusses anzuordnen.

Die Beladeanordnung ist dabei vorzugsweise nach der Art eines horizontal beweglichen Schlittens ausgebildet, auf den eine Filteranordnung seitlich neben dem zweiten Rohranschluss aufgesetzt werden kann, und anschließend mittels des Schlittens in eine Position (Reinigungsposition) oberhalb des zweiten Rohranschlusses angeordnet werden kann.

Dabei ist es von besonderem Vorteil, wenn der Beladeanordnung ein zweiter Verstellmotor zugeordnet ist, der die Beladeanordnung zwischen der Reinigungsposition und einer Beladeposition bewegen kann.

Der zweite Verstellmotor kann ebenfalls ein Elektromotor sein. Der zweite Verstellmotor kann ein Linearantrieb sein, der eine Filteraufnahme bzw. einen Schlitten, an dem die Filteraufnahme festgelegt ist, horizontal bewegen kann. Der Linearantrieb kann ein klassischer Elektromotor mit einem Rotations-Translations-Wandler sein, kann jedoch auch ein elektrischer Linearmotor sein.

Sowohl der erste Verstellmotor als auch der zweite Verstellmotor können in alternativen Ausführungsformen auch als Elektromagnetantriebe, als pneumatische Antriebe oder als hydraulische Antriebe ausgebildet sein.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnungen. Es zeigen:
- Fig. 1: eine schematische Seitenansicht einer ersten Ausführungsform einer erfindungsgemäßen Reinigungsvorrichtung;
- Fig. 2: eine perspektivische schematische Darstellung einer weiteren Ausführungsform einer erfindungsgemäßen Reinigungsvorrichtung;
- Fig. 3: eine Seitenansicht der Reinigungsvorrichtung der Fig. 2 aus einer Sichtrichtung III;
- Fig. 4: eine Seitenansicht der Reinigungsvorrichtung der Fig. 2 aus einer Sichtrichtung IV;
- Fig. 5: eine Seitenansicht der Reinigungsvorrichtung der Fig. 2 aus einer Sichtrichtung V;
- Fig. 6: eine Schnittansicht entlang einer Linie VI-VI in Fig. 5;
- Fig. 7: eine Seitenansicht der Reinigungsvorrichtung der Fig. 2 aus einer Sichtrichtung VII bei der sich eine Beladeanordnung in einer Reinigungsposition befindet;
- Fig. 8: eine Teilansicht der Fig. 7, bei der sich die Beladeanordnung in einer Beladeposition befindet; und
- Fig. 9: eine der Fig. 7 vergleichbare Ansicht, wobei die Filteranordnung zwischen dem ersten und dem zweiten Rohranschluss kraftgesteuert eingespannt ist.

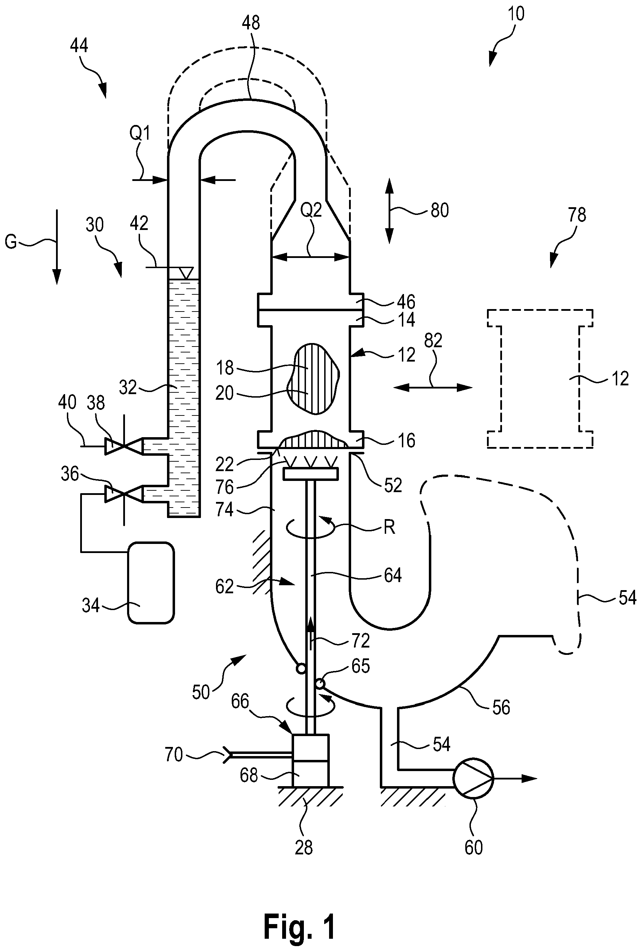

In Fig. 1 ist eine Ausführungsform einer Reinigungsvorrichtung schematisch dargestellt und generell mit 10 bezeichnet.

Die Reinigungsvorrichtung 10 dient zur Reinigung einer Filteranordnung 12, insbesondere in Form eines Dieselpartikelfilters, der normalerweise im Abgasstrang eines dieselmotorbetriebenen Kraftfahrzeuges eingebaut ist.

Die Filteranordnung 12 weist einen ersten Fluidanschluss 14 auf, der im eingebauten Zustand der Filteranordnung 12 die Auslassseite darstellt. Ferner weist die Filteranordnung 12 einen zweiten Fluidanschluss 16 auf, der im eingebauten Zustand der Filteranordnung eine Einlassseite darstellt, also dem Antriebsmotor (insbesondere Dieselmotor) zugewandt ist.

Zwischen dem ersten Fluidanschluss 14 und dem zweiten Fluidanschluss 16, die sich entlang einer Längsachse gegenüberliegen, ist eine Filtereinrichtung 18 angeordnet, die eine Vielzahl von Längskanälen 20 beinhaltet. Hinsichtlich des allgemeinen und speziellen Aufbaus derartiger Filteranordnungen wird verwiesen auf das allgemeine Fachwissen zu Dieselpartikelfiltern.

Bei 22 ist eine Oberfläche der Filtereinrichtung 18 auf der Seite des zweiten Fluidanschlusses 16 dargestellt.

Die Reinigungsvorrichtung 10 weist ein Gehäuse 28 auf. An dem Gehäuse 28 ist eine Generatorvorrichtung 30 angeordnet, insbesondere verschieblich angeordnet, wie es nachstehend ausgeführt werden wird. Die Generatorvorrichtung 30 weist eine Aufnahmekammer 32 zur Aufnahme einer Menge an Flüssigkeit auf, wobei es sich bei der Flüssigkeit insbesondere um Wasser handeln kann, dem Zusätze beigemischt werden können, wie es in dem Dokument DE 10 2015 112 939 A1 beschrieben ist.

Ferner weist die Generatorvorrichtung 30 eine Druckgaserzeugungsvorrichtung 34 auf, die einen Drucktank und einen Kompressor beinhalten kann. Jedenfalls kann die Druckgaserzeugungsvorrichtung 34 Gas, insbesondere Luft, mit einem Druck von bspw. 8 bar und einem Volumen von bspw. 2 m³ bereit halten, so dass das Volumen im entspannten Zustand bspw. 16 m³ betragen könnte.

Die Druckgaserzeugungsvorrichtung 34 ist mit einem unteren Abschnitt der Aufnahmekammer 32 über ein Gasventil 36 verbunden. Die Aufnahmekammer 32, insbesondere ein unterer Abschnitt hiervon, ist über ein Flüssigkeitsventil 38 mit einer Versorgung für Reinigungsflüssigkeit 40 (insbesondere Wasser) verbunden.

Folglich kann bei geschlossenem Gasventil 36 zunächst Flüssigkeit in die Aufnahmekammer 32 eingeleitet werden, bis hin zu einem Flüssigkeitsniveau 42, das oberhalb der Ventile 36, 38 angeordnet ist. Anschließend kann das Flüssigkeitsventil 38 geschlossen werden.

Die Ventile 36, 38 befinden sich insbesondere in einem unteren Drittel der Aufnahmekammer 32, bezogen auf ein unteres Ende der Aufnahmekammer und das Flüssigkeitsniveau 42.

Die Aufnahmekammer 32 ist über eine erste Rohranordnung 44 mit einem ersten Rohranschluss 46 verbunden, der dazu ausgebildet ist, dichtend mit dem ersten Fluidanschluss 14 verbunden zu werden.

Die erste Rohranordnung 44 weist einen Umlenk-Rohrabschnitt 48 auf, der oberhalb der Aufnahmekammer 32 zunächst vertikal nach oben verläuft, und zwar entgegen einer Schwerkraftrichtung G, dann einen U-förmigen Abschnitt aufweist und ferner einen nicht näher bezeichneten Abschnitt von dem U-förmigen Abschnitt bis hin zu dem ersten Rohranschluss 46 beinhaltet, der von den U-förmigen Abschnitt nach unten parallel zur Schwerkraftrichtung G hin zu dem ersten Rohranschluss 46 führt.

Der Querschnitt bzw. die Querschnittsfläche der ersten Rohranordnung 44 kann konstant sein, ist jedoch vorzugsweise derart ausgebildet, dass die erste Rohranordnung 44 in dem Bereich benachbart zu der Aufnahmekammer 32 einen ersten Querschnitt Q1 hat, der kleiner ist als ein zweiter Querschnitt Q2, den die erste Rohranordnung 44 in einem Bereich benachbart zu dem ersten Rohranschluss 46 hat.

Die Reinigungsvorrichtung 10 beinhaltet ferner eine zweite Rohranordnung 50, die einen zweiten Rohranschluss 52 beinhaltet. Der zweite Rohranschluss 52 ist dazu ausgebildet, mit dem zweiten Fluidanschluss der Filteranordnung 12 verbunden zu werden.

Die zweite Rohranordnung 50 ist an ihrem anderen Ende mit einer Auffangvorrichtung 54 verbunden, die bspw. einen Tropfenabscheider beinhalten kann, ähnlich, wie es in dem Dokument DE 10 2015 112 939 A1 beschrieben ist.

Zwischen dem zweiten Rohranschluss 52 und dem Übergang in die Auffangvorrichtung 54 weist die zweite Rohranordnung 50 einen siphon-artigen Rohrabschnitt 56 auf, an dessen unterem Ende ein Abfluss 58 vorgesehen ist, über den Fluid abgeleitet werden kann. Optional ist in dem Abfluss 58 eine Pumpe 60 integriert.

In Fig. 1 ist die Filteranordnung 12 in einer Reinigungsposition gezeigt, bei der sie mit ihrem zweiten Fluidanschluss 16 mit dem zweiten Rohranschluss 52 verbunden ist, und bei der der erste Fluidanschluss 14 dichtend mit dem ersten Rohranschluss 46 verbunden ist.

Mittels der Reinigungsvorrichtung kann folglich eine Reinigung derart erfolgen, dass zunächst in die Aufnahmekammer 32 Fluid eingefüllt wird, bis das Fluid ein bestimmtes Flüssigkeitsniveau 42 erreicht hat. Anschließend wird das Gasventil 36 geöffnet, so dass ein Druckluftstoß in den unteren Bereich der Aufnahmekammer 32 eingeleitet wird, so dass das in der Aufnahmekammer 32 enthaltene Fluid aufgewirbelt bzw. aufgeschäumt und in Richtung zu dem ersten Rohranschluss 46 heraus getrieben wird, und zwar über den Umlenk-Rohrabschnitt 48.

Das Gas-Flüssigkeitsgemisch dringt dann unter hohem Druck und mit hoher Geschwindigkeit in die Filtereinrichtung 18 ein, geht durch die Filtereinrichtung 18 hindurch und reißt dabei Verunreinigungen jeglicher Art mit sich. Das Gas-Flüssigkeitsgemisch tritt dann aus der Oberfläche 22 aus und in die zweite Rohranordnung 50 ein, wo es über den siphon-artigen Rohrabschnitt 56 hin zu der Auffangvorrichtung 54 geleitet wird, wo sich das Gas-Flüssigkeitsgemisch entspannen kann. Die darin enthaltene Flüssigkeit wird über einen Tropfenabscheider aufgefangen, so dass anschließend eine umweltgerechte Nachbearbeitung des aufgefangenen Gas-Flüssigkeitsgemisches, das mit Verunreinigungen versetzt ist, erfolgen kann.

Wie in dem Dokument DE 10 2015 112 939 A1 beschrieben, können eine Mehrzahl derartiger Reinigungsimpulse durchgeführt werden. Anschließend kann auch wenigstens ein Trocknungsimpuls durchgeführt werden, bei dem Gas in die - leere - Auffangkammer 32 eingeleitet wird.

Bei der Reinigungsvorrichtung 10 ist die Filteranordnung 12 so eingespannt, dass, in Schwerkraftrichtung G gesehen, der zweite Fluidanschluss 16 unterhalb des ersten Fluidanschlusses 14 angeordnet ist.

Die Filteranordnung 12 kann dabei in einem vollkommen ungereinigten Zustand in die Reinigungsvorrichtung eingesetzt werden.

Um vorab Ruß und andere Versottungen zu entfernen, die an der Oberfläche 22 der Filtereinrichtung 18 anhaften, insbesondere auch in einem Flanschabschnittsbereich des zweiten Fluidanschlusses 16, ist eine Fluid-Sprühvorrichtung 62 vorgesehen.

Die Fluid-Sprühvorrichtung 62 weist eine Antriebswelle 64 auf, die über eine Drehdurchführung 65 eine Wand der zweiten Rohranordnung 50 durchdringt. Eine außerhalb der zweiten Rohranordnung 50 liegende Versorgungseinrichtung 66 dient dazu, mittels eines Antriebsmotors 68 die Antriebswelle 64 anzutreiben, die sich in der Längsrichtung parallel zur Schwerkraftrichtung erstreckt.

Ferner beinhaltet die Versorgungseinrichtung 66 eine Fluidzuführeinrichtung 70, über die ein Sprühfluid, bei dem es sich um Wasser handeln kann oder um Wasser, dem ein Reinigungsmittel zugesetzt ist, durch die Antriebswelle 64 (die als Hohlwelle ausgebildet ist) hindurch hin zu einem Sprühbalken 74 zugeführt werden kann.

Das Fluid 72, das von der Fluidzuführeinrichtung 70 zugeführt wird und über die Antriebswelle 64 zu dem Sprühbalken 74 geleitet wird, wird an dem Sprühbalken 74 über eine Mehrzahl von Sprühdüsen 76 ausgestoßen.

Der Sprühbalken 74 ist in unmittelbarer Nachbarschaft zu der Oberfläche 22 angeordnet und im Wesentlichen parallel hierzu ausgerichtet. Der Sprühbalken kann eine Länge quer zu der Längsrichtung haben, die im Bereich von 0,3 bis 0,9 des Durchmessers der Oberfläche 22 liegt, vorzugsweise in einem Bereich von 0,5 bis 0,8 dieses Durchmessers.

Der Abstand zwischen dem Sprühbalken 74 und der Oberfläche 22 ist vorzugsweise kleiner als die Länge des Sprühbalkens in Querrichtung und kann bspw. in einem Bereich von 5 cm bis 20 cm liegen.

Die Sprühdüsen 76 sind entlang des Sprühbalkens 74 so angeordnet, dass sie gemeinschaftlich den gesamten Durchmesser der Oberfläche 22 als auch angrenzende Bereiche des Flanschabschnittes des zweiten Fluidanschlusses 16 besprühen können.

Durch den Antriebsmotor 68 kann die Welle 64 und folglich der Sprühbalken 74 in Rotation versetzt werden, wie es in Fig. 1 bei R gezeigt ist.

Folglich kann mittels des Sprühbalkens 74 die gesamte zu reinigende Fläche besprüht werden.

Das Sprühfluid 72 dringt möglicherweise etwas in die Längskanäle 20 von der Seite der Oberfläche 22 aus ein, tropft jedoch sofort wieder nach unten weg. Das verwendete Sprühfluid, das aus den Sprühdüsen 76 ausgetreten ist, und damit abgewaschene Verunreinigungen sammeln sich in einem unteren Teil des siphon-artigen Rohrabschnittes 56 und können dort über den Abfluss 58 abgeführt werden.

Folglich ist es mit einer "Einspannung" möglich, an der Oberfläche 22 der Filteranordnung 12 eine Vorabreinigung durchzuführen, und anschließend ohne Entnahme der Filteranordnung 12 ein Reinigungsverfahren durchzuführen, bei dem ein Gas-Flüssigkeitsgemisch unter hohem Druck und mit hoher Geschwindigkeit durch die Filtereinrichtung 18 hindurch gedrückt wird, und zwar ausgehend von der Seite des ersten Fluidanschlusses 14 hin zu dem zweiten Fluidanschluss 16.

Das aus dem zweiten Fluidanschluss 16 austretende Gas-Flüssigkeitsgemisch trifft dabei auf den Sprühbalken 74, der jedoch einen relativ gesehen kleinen Querschnitt im Vergleich zu der Gesamtfläche der Oberfläche 22 bildet und folglich die Strömung des Gas-Flüssigkeitsgemisches aus der Filtereinrichtung 18 heraus nicht wesentlich beeinträchtigt.

In Fig. 1 ist ferner gezeigt, dass die Reinigungsvorrichtung 10 eine Beladeanordnung 78 aufweisen kann, um Filteranordnungen 12 von außerhalb der Reinigungsvorrichtung 10 in eine Reinigungsposition zu versetzen, in der die Filteranordnung 12 zwischen den Rohranschlüssen 46, 52 angeordnet ist. Dies kann mittels eines zweiten Verstellmotors 82 erfolgen.

Ein erster Verstellmotor 80 kann dazu ausgebildet sein, zumindest einen Abschnitt der ersten Rohranordnung 44, insbesondere die gesamte Rohranordnung 44 in eine Richtung parallel zu der Schwerkraftrichtung zu verstellen, um ein - insbesondere automatisiertes - Einführen einer Filteranordnung 12 zwischen die Rohranschlüsse 46, 52 zu ermöglichen, und um anschließend den ersten Rohranschluss 46 mit einer bestimmten Kraft auf den ersten Fluidanschluss 14 aufzusetzen, derart, dass eine Art Ringdichtung erfolgt. Hierdurch kann vermieden werden, dass das unter hohem Druck über den ersten Rohranschluss 46 in die Filtereinrichtung 18 geleitete Gas-Flüssigkeitsgemisch seitlich zwischen dem ersten Fluidanschluss 14 und dem ersten Rohranschluss 46 austritt.

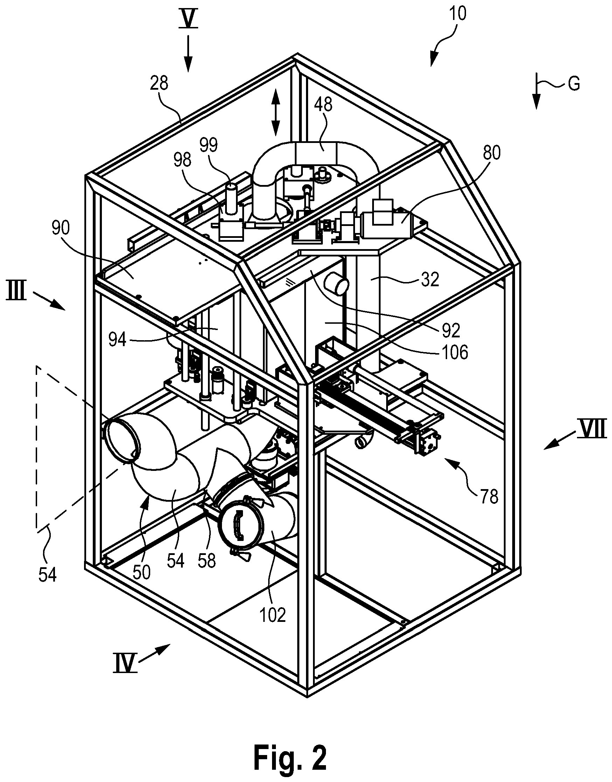

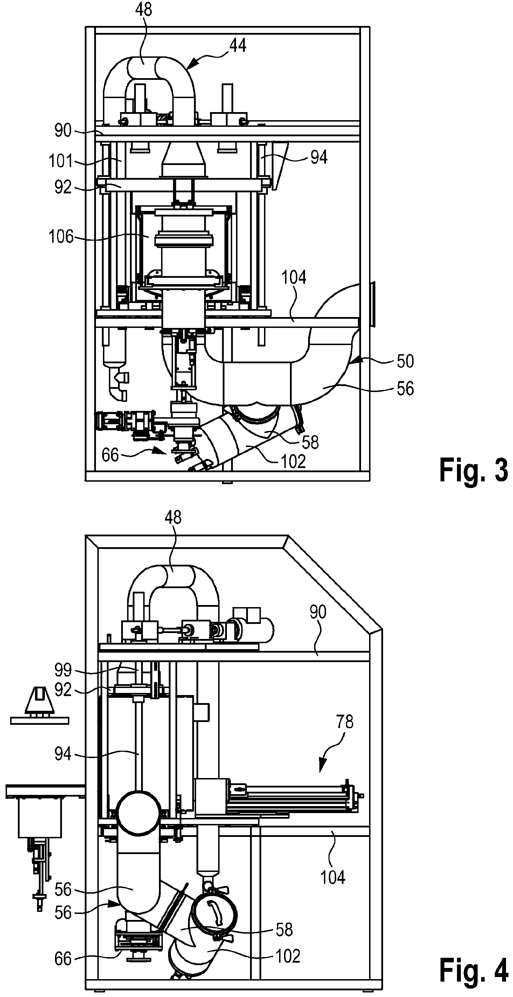

In den Figuren 2 bis 9 ist eine weitere Ausführungsform einer Reinigungsvorrichtung 10 dargestellt, die hinsichtlich Aufbau und Funktionsweise generell der Reinigungsvorrichtung 10 der Fig. 1 entspricht. Gleiche Elemente sind daher durch gleiche Bezugszeichen bezeichnet. Im Folgenden werden im Wesentlichen die Unterschiede beschrieben.

Wie es in den Figuren 2 bis 9 gezeigt ist, weist das Gehäuse 28 einen Rahmen auf, an dem eine erste Lagerplatte 90 festgelegt ist, die sich in horizontaler Richtung erstreckt. An der ersten Lagerplatte 90 ist der erste Verstellmotor 80 in Form eines Elektromotors angeordnet. Ferner ist die erste Rohranordnung 44 in Bezug auf die erste Lagerplatte 90 so angeordnet, dass der Umlenk-Rohrabschnitt 48 oberhalb der ersten Lagerplatte 90 angeordnet ist. Jener Rohrabschnitt, der sich hin zu der Aufnahmekammer 32 erstreckt, und jener Rohrabschnitt, der sich hin zu dem ersten Rohranschluss 46 erstreckt, werden durch die erste Lagerplatte 90 hindurch verschieblich geführt.

An dem Gehäuse 28 ist ferner eine Hubplatte 92 in Schwerkraftrichtung G verschieblich gelagert. Jener Abschnitt der ersten Rohranordnung 44, der hin zu dem ersten Rohranschluss 46 führt (und der den etwas größeren Querschnitt Q2 hat), ist an der Hubplatte 92 festgelegt.

Die Hubplatte 92 ist in vertikaler Richtung antreibbar. Hierzu ist eine Antriebswelle des ersten Verstellmotors 80 mit einem Verteilergetriebe 96 verbunden. Das Verteilergetriebe 96 ist über weitere Spindeln mit einem ersten Winkelgetriebe 98 verbunden, das eine erste Hubstange 99 in vertikaler Richtung antreibt, und ist über eine weitere Spindel mit einem zweiten Winkelgetriebe 100 verbunden, das eine zweite Hubstange 101 parallel zu der ersten Hubstange 99 antreibt. Die zwei Hubstangen 99, 101 sind mit der Hubplatte 92 verbunden, um die erste Rohranordnung 44 in vertikaler Längsrichtung antreiben zu können.

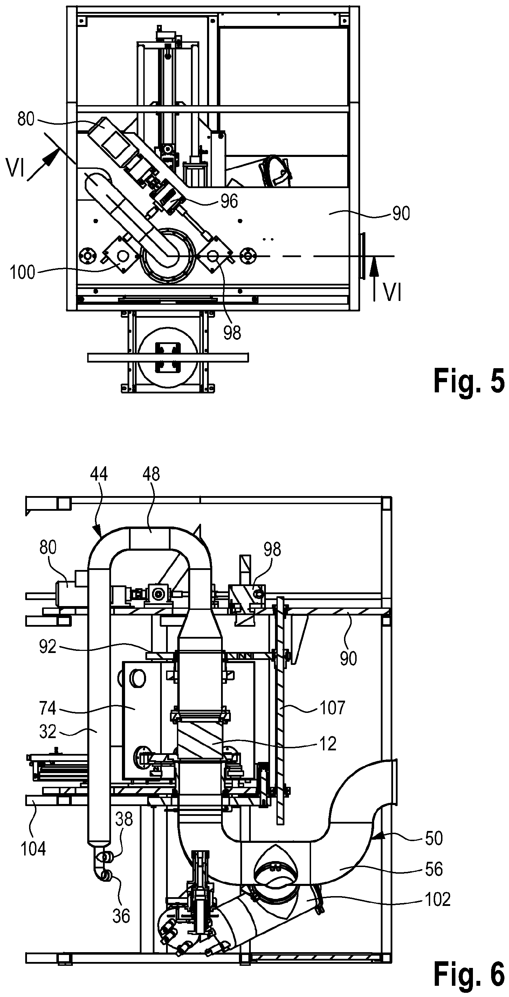

Wie es insbesondere in Fig. 6 gut zu erkennen ist, ist der Abfluss des siphon-artigen Rohrabschnittes 56 mit einem schräggestellten Abflussrohrabschnitt 102 verbunden, über den das Sprühfluid und damit abgereinigte Verunreinigungen gezielt abgeführt werden können.

Unterhalb der ersten Lagerplatte 90 ist an dem Gehäuse 28 eine zweite Lagerplatte 104 festgelegt. An der zweiten Lagerplatte 104 ist die zweite Rohranordnung 50 befestigt, derart, dass sich der zweite Rohranschluss 52 oberhalb der zweiten Lagerplatte 104 befindet.

Auf der zweiten Lagerplatte 104 ist die Beladeanordnung 78 angeordnet.

Die zweite Lagerplatte 104 und die erste Lagerplatte 90 können über eine Trägerplatte 107 miteinander verbunden sein, wie es insbesondere in Fig. 6 gezeigt ist.

Zwischen der ersten Lagerplatte 90 und der zweiten Lagerplatte 104 ist ein Käfig 94 angeordnet, der den Bereich der Rohranschlüsse 46, 52 zumindest teilweise umgibt.

Die Beladeanordnung 78 beinhaltet einen Linearantrieb 108, der eine Ladestange 110 antreibt, und zwar in einer horizontalen Richtung, wobei sich die Ladestange 110 durch den Käfig 94 hindurch erstreckt.

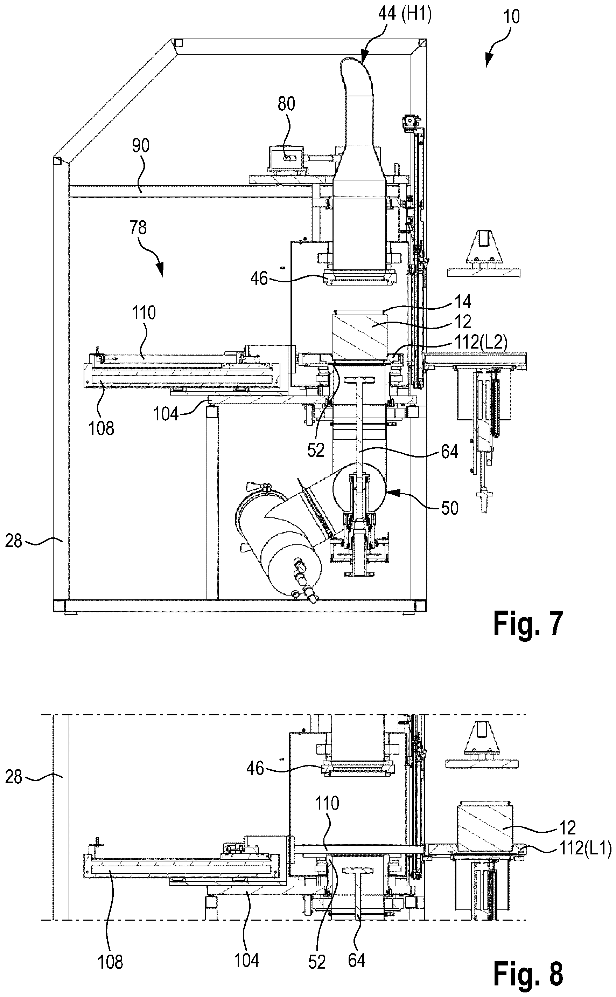

Wie es in den Figuren 7 bis 8 gezeigt ist, kann die Beladeanordnung 78 in eine Beladeposition L1 versetzt werden, bei der eine Filteraufnahme 112, die mit der Ladestange 110 verbunden ist, seitlich neben den Rohranschlüssen 46, 52 angeordnet ist, um eine Filteranordnung 12 zur Reinigung bequem darauf absetzen zu können.

Anschließend kann der Linearantrieb 108, der den zweiten Verstellmotor 82 bildet, so angetrieben werden, dass die Filteraufnahme 112 in Richtung hin zu den Rohranschlüssen 46, 52 bewegt wird, bis die Filteranordnung 12 in einer Reinigungsposition L2 genau dazwischen angeordnet ist.

Vor diesem Schritt wurde der erste Verstellmotor 80 so angesteuert, dass der erste Rohranschluss 46 abgehoben ist, wie es in Fig. 7 gezeigt ist.

In Fig. 7 ist gezeigt, dass die Beladeanordnung die Reinigungsposition L2 erreicht hat, bei der die Filteranordnung 12 zwischen den Rohranschlüssen 46, 52 angeordnet ist.

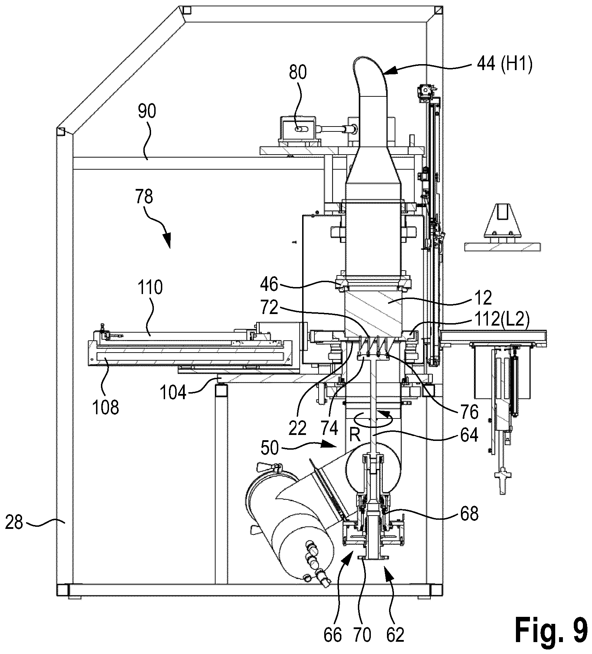

Anschließend wird der erste Verstellmotor 80 angetrieben, so dass der erste Rohranschluss 46 kraftgesteuert auf den ersten Fluidanschluss 14 aufgesetzt wird, derart, dass eine Ringdichtungswirkung erreicht wird. Dies ist in Fig. 9 gezeigt. In Fig. 9 ist ferner gezeigt, dass die Fluid-Sprühvorrichtung 62 dazu angesteuert wird, den Sprühbalken 74 in Rotation zu versetzen und Sprühfluid 72 über die Düsen 76 hin auf die Oberfläche 22 zu sprühen.

In einem anschließenden Schritt kann die Fluid-Sprühvorrichtung 62 wieder außer Funktion gesetzt werden, so dass kein Sprühfluid mehr zugeführt wird und der Sprühbalken 74 sich nicht mehr dreht.

Anschließend kann wenigstens ein Reinigungsimpuls durchgeführt werden, bei dem, wie oben beschrieben, ein Gas-Flüssigkeitsgemisch erzeugt wird und von oben durch die Filteranordnung 12 hindurch getrieben wird. Ferner kann wenigstens ein Trocknungsimpuls durchgeführt werden.

Anschließend kann der erste Verstellmotor 80 wieder angetrieben werden, um den ersten Rohranschluss 46 von dem ersten Fluidanschluss 14 abzuheben, so dass wieder die in Fig. 7 gezeigte Position erreicht ist. Anschließend kann die Beladeanordnung 78 so angetrieben werden, dass wieder die Beladeposition L1 eingerichtet wird, so dass eine gereinigte Filteranordnung 12 aus der Reinigungsvorrichtung 10 entnommen und eine weitere zu reinigende Filteranordnung 12 eingesetzt werden kann.

### Bezugszeichenliste:

- 10: Reinigungsvorrichtung
- 12: Filteranordnung
- 14: erster Fluidanschluss (Auslassseite)
- 16: zweiter Fluidanschluss (Einlassseite)
- 18: Filtereinrichtung
- 20: Längskanäle
- 22: Oberfläche von 14

- 28: Gehäuse
- 30: Generatorvorrichtung (10)
- 32: Aufnahmekammer
- 34: Druckgaserzeugungsvorrichtung
- 36: Gasventil
- 38: Flüssigkeitsventil
- 40: Reinigungsflüssigkeit
- 42: Flüssigkeitsniveau
- 44: erste Rohranordnung
- 46: erster Rohranschluss
- 48: Umlenk-Rohrabschnitt
- 50: zweite Rohranordnung
- 52: zweiter Rohranschluss
- 54: Auffangvorrichtung (mit Tropfenabscheider)
- 56: siphon-artiger Rohrabschnitt
- 58: Abfluss
- 60: Pumpe
- 62: Fluid-Sprühvorrichtung
- 64: Antriebswelle
- 65: Drehdurchführung
- 66: Versorgungseinrichtung
- 68: Antriebsmotor
- 70: Fluidzuführeinrichtung
- 72: Fluid
- 74: Sprühbalken
- 76: Sprühdüsen
- 78: Beladeanordnung
- 80: erster Verstellmotor
- 82: zweiter Verstellmotor
- 90: erste Lagerplatte
- 92: Hubplatte
- 94: Käfig
- 96: Verteilergetriebe
- 98: erstes Winkelgetriebe
- 99: erste Hubstange
- 100: zweites Winkelgetriebe
- 101: zweite Hubstange
- 102: Abflussrohrabschnitt, geneigt
- 104: zweite Lagerplatte
- 106: Stützplatte
- 107: Trägerplatte
- 108: Linearantrieb (82)
- 110: Ladestange
- 112: Filteraufnahme
- G: Schwerkraftrichtung
- Q1: erster Querschnitt
- Q2: zweiter Querschnitt
- R: Rotation (64)
- H1: erste Hubposition
- H2: zweite Hubposition
- L1: Beladeposition
- L2: Reinigungsposition

## Patentansprüche

1. Reinigungsvorrichtung (10) zum Reinigen einer Filteranordnung (12), die einen ersten Fluidanschluss (14), einen zweiten Fluidanschluss (16) und eine Filtereinrichtung (18) aufweist, die zwischen dem ersten Fluidanschluss (14) und dem zweiten Fluidanschluss (16) angeordnet ist und die eine Oberfläche hat, an der Verunreinigungen anhaften können, mit:
- einer Generatorvorrichtung (30) zur Erzeugung eines Gas-Flüssigkeitsgemisches, wobei die Generatorvorrichtung (30) eine Aufnahmekammer (32) zur Aufnahme einer Flüssigkeit und eine Druckgaserzeugungsvorrichtung (34) aufweist, die mit der Aufnahmekammer (32) verbindbar ist, derart, dass ein Einleiten des Gases aus der Druckgaserzeugungsvorrichtung (34) in die Aufnahmekammer (32) hinein unterhalb eines Flüssigkeitsniveaus (42) in der Aufnahmekammer (32) erfolgt, gesehen in der Schwerpunktrichtung;
- einer ersten Rohranordnung (44), die mit der Generatorvorrichtung (30) verbunden ist und die einen ersten Rohranschluss (46) aufweist, der mit dem ersten Fluidanschluss (14) verbindbar ist, um das Gas-Flüssigkeitsgemisch unter Druck in die Filteranordnung (12) zu leiten; und
- einer zweiten Rohranordnung (50), die einen mit dem zweiten Fluidanschluss (16) verbindbaren zweiten Rohranschluss (52) aufweist und die mit einer Auffangvorrichtung (54) zum Auffangen des durch die Filteranordnung (12) geleiteten Gas-Flüssigkeitsgemisches und von aus der Filteranordnung (12) mitgerissenen Verunreinigungen verbunden ist;
**dadurch gekennzeichnet, dass**
in der zweiten Rohranordnung (50) eine Fluid-Sprühvorrichtung (62) angeordnet ist, die wenigstens eine Sprühdüse (76) aufweist, die auf die Filtereinrichtung (18) gerichtet ist.

2. Reinigungsvorrichtung nach Anspruch 1, wobei der erste Rohranschluss (46) in Richtung der Schwerkraft (G) oberhalb des zweiten Rohranschlusses (52) angeordnet ist, wobei die erste Rohranordnung (44) einen Umlenk-Rohrabschnitt (48) aufweist, der die Aufnahmekammer (32) der Generatorvorrichtung (30) mit dem ersten Rohranschluss (46) verbindet, derart, dass die Aufnahmekammer (32) vor Erzeugen des Gas-Flüssigkeitsgemisches mit Flüssigkeit gefüllt werden kann, ohne dass die Flüssigkeit in die Filteranordnung (12) gelangt.

3. Reinigungsvorrichtung nach Anspruch 2, wobei die erste Rohranordnung (44) so aufgebaut ist, dass das von der Generatorvorrichtung (30) erzeugte Gas-Flüssigkeitsgemisch unter Druck gegen die Schwerkraft (G) nach oben, dann durch den Umlenk-Rohrabschnitt (48) hindurch und schließlich nach unten Richtung der Filteranordnung (12) geführt wird.

4. Reinigungsvorrichtung nach einem der Ansprüche 1 bis 3, wobei die Fluid-Sprühvorrichtung (62) einen Sprühbalken (74) aufweist, der sich quer zu einer Längsrichtung erstreckt und an dem eine Mehrzahl von Sprühdüsen (76) angeordnet ist.

5. Reinigungsvorrichtung nach Anspruch 3 oder 4, wobei die Fluid-Sprühvorrichtung (62) um eine Längsachse rotierbar ist.

6. Reinigungsvorrichtung nach einem der Ansprüche 3 bis 5, wobei die zweite Rohranordnung (50) einen siphon-artigen Rohrabschnitt (56) aufweist, in dem sich Sprühfluid und Verunreinigungen sammeln können, die mittels der Fluid-Sprühvorrichtung (62) von der Filtereinrichtung (18) abgelöst sind.

7. Reinigungsvorrichtung nach Anspruch 6, wobei der siphon-artige Rohrabschnitt (56) einen Abfluss (58) aufweist, über den Sprühfluid und Verunreinigungen aus der zweiten Rohranordnung (50) entfernt werden können.

8. Reinigungsvorrichtung nach einem der Ansprüche 1 bis 7, wobei wenigstens ein Abschnitt der ersten Rohranordnung (44) in einer Längsrichtung verschieblich ist, um ein Einsetzen der Filteranordnung (12) zwischen dem ersten Rohranschluss (46) und dem zweiten Rohranschluss (52) zu erleichtern.

9. Reinigungsvorrichtung nach Anspruch 8, wobei der ersten Rohranordnung (44) ein erster Verstellmotor (80) zugeordnet ist, mittels dessen der wenigstens eine Abschnitt der ersten Rohranordnung (44) verschiebbar ist.

10. Reinigungsvorrichtung nach Anspruch 9, wobei der erste Rohranschluss (46) mittels des ersten Verstellmotors (80) kraftgesteuert auf den ersten Filteranschluss (14) aufsetzbar ist.

11. Reinigungsvorrichtung nach einem der Ansprüche 1 bis 10, mit einer Beladeanordnung (78), die in einer Richtung quer zu einer Längsrichtungsachse verschiebbar ist, um eine Filteranordnung (12) in einer Reinigungsposition oberhalb des zweiten Rohranschlusses (52) anzuordnen.

12. Reinigungsvorrichtung nach Anspruch 11, wobei der Beladeanordnung (78) ein zweiter Verstellmotor (82) zugeordnet ist, der die Beladeanordnung (78) zwischen der Reinigungsposition und einer Beladeposition bewegen kann.

13. Verfahren zum Reinigen einer Filteranordnung (12), die einen ersten Fluidanschluss (14), einen zweiten Fluidanschluss (16) und eine Filtereinrichtung (18) aufweist, die zwischen dem ersten Fluidanschluss (14) und dem zweiten Fluidanschluss (16) angeordnet ist und die eine Oberfläche hat, an der Verunreinigungen anhaften können, wobei das Verfahren die Schritte aufweist:
- Anordnen der Filteranordnung (12) in einer Reinigungsvorrichtung (10) nach einem der Ansprüche 1 - 12, derart, dass der zweite Fluidanschluss (16) nach unten weist und der erste Fluidanschluss (14) über den Umlenk-Rohrabschnitt (48) mit der Aufnahmekammer (32) verbunden ist,
- zumindest teilweises Befüllen der Aufnahmekammer (32) mit einer Flüssigkeit, und
- Erzeugen eines Reinigungsimpulses, bei dem Gas aus der Druckgaserzeugungseinrichtung (34) unter Druck in die Aufnahmekammer (32) geleitet wird, und zwar für eine Zeitdauer, die kleiner ist als 5 Sekunden, so dass ein Gas-Flüssigkeitsgemisch über einen Umlenk-Rohrabschnitt (48) von oben in die Filtereinrichtung (18) hinein, durch die Filtereinrichtung (18) hindurch und aus dem zweiten Fluidanschluss (16) heraus getrieben wird.

14. Verfahren nach Anspruch 13, wobei vor dem Erzeugen des Reinigungsimpulses die dem zweiten Fluidanschluss (16) zugeordnete Seite der Filtereinrichtung (18) mittels der Fluid-Sprühvorrichtung (62) gereinigt wird, die in der zweiten Rohranordnung (52) angeordnet ist.

## Claims

1. Cleaning device (10) for cleaning a filter arrangement (12), which has a first fluid connection (14), a second fluid connection (16), and a filter device (18) that is arranged between the first fluid connection (14) and the second fluid connection (16) and has a surface to which contaminants can adhere, comprising:
- a generator device (30) for generating a gas-liquid mixture, wherein the generator device (30) has a receiving chamber (32) for receiving a liquid and a compressed gas generation device (34) that can be connected to the receiving chamber (32) in such a way that the introduction of gas from the compressed gas generation device (34) into the receiving chamber (32) takes place below a liquid level (42) in the receiving chamber (32), as seen in the center of gravity direction;
- a first pipe arrangement (44), which is connected to the generator device (30) and has a first pipe connection (46) that can be connected to the first fluid connection (14) to direct the gas-liquid mixture under pressure into the filter arrangement (12); and
- a second pipe arrangement (50), which has a second pipe connection (52) that can be connected to the second fluid connection (16) and which is connected to a collection device (54) for collecting the gas-liquid mixture passed through the filter arrangement (12) and contaminants carried along from the filter arrangement (12);
**characterized in that**
a fluid spray device (62) is arranged in the second pipe arrangement (50), which has at least one spray nozzle (76) directed at the filter device (18).

2. Cleaning device according to claim 1, wherein the first pipe connection (46) is arranged above the second pipe connection (52) in the direction of gravity (G), wherein the first pipe arrangement (44) has a deflection pipe section (48) that connects the receiving chamber (32) of the generator device (30) with the first pipe connection (46) in such a way that the receiving chamber (32) can be filled with liquid before generating the gas-liquid mixture, without the liquid entering the filter arrangement (12).

3. Cleaning device according to claim 2, wherein the first pipe arrangement (44) is configured so that the gas-liquid mixture generated by the generator device (30) is directed under pressure against gravity (G) upwards, then through the deflection pipe section (48), and finally downwards in the direction of the filter arrangement (12).

4. Cleaning device according to one of claims 1 to 3, wherein the fluid spray device (62) has a spray bar (74) that extends transversely to a longitudinal direction and on which a plurality of spray nozzles (76) are arranged.

5. Cleaning device according to claim 3 or 4, wherein the fluid spray device (62) is rotatable about a longitudinal axis.

6. Cleaning device according to one of claims 3 to 5, wherein the second pipe arrangement (50) has a siphon-like pipe section (56) in which spray fluid and contaminants can accumulate that have been detached from the filter device (18) by means of the fluid spray device (62).

7. Cleaning device according to claim 6, wherein the siphon-like pipe section (56) has a drain (58) via which spray fluid and contaminants can be removed from the second pipe arrangement (50).

8. Cleaning device according to one of claims 1 to 7, wherein at least a section of the first pipe arrangement (44) is displaceable in a longitudinal direction to facilitate an insertion of the filter arrangement (12) between the first pipe connection (46) and the second pipe connection (52).

9. Cleaning device according to claim 8, wherein the first pipe arrangement (44) is assigned a first adjustment motor (80), by means of which the at least one section of the first pipe arrangement (44) is displaceable.

10. Cleaning device according to claim 9, wherein the first pipe connection (46) can be placed onto the first filter connection (14) by means of the first adjustment motor (80) in a force-controlled manner.

11. Cleaning device according to one of claims 1 to 10, comprising a loading arrangement (78), which is displaceable in a direction transverse to a longitudinal direction axis to arrange a filter arrangement (12) in a cleaning position above the second pipe connection (52).

12. Cleaning device according to claim 11, wherein the loading arrangement (78) is assigned a second adjustment motor (82), which can move the loading arrangement (78) between the cleaning position and a loading position.

13. Method for cleaning a filter arrangement (12), which has a first fluid connection (14), a second fluid connection (16), and a filter device (18) that is arranged between the first fluid connection (14) and the second fluid connection (16) and has a surface to which contaminants can adhere, wherein the method comprises the steps:
- arranging the filter arrangement (12) in a cleaning device (10) according to one of claims 1 - 12, such that the second fluid connection (16) points downward and the first fluid connection (14) is connected to the receiving chamber (32) via the deflection pipe section (48),
- at least partially filling the receiving chamber (32) with a liquid, and
- generating a cleaning pulse, in which gas from the compressed gas generation device (34) is directed under pressure into the receiving chamber (32) for a duration of less than 5 seconds, so that a gas-liquid mixture is driven from above into the filter device (18) via the deflection pipe section (48), through the filter device (18), and out of the second fluid connection (16).

14. Method according to claim 13, wherein before generating the cleaning pulse, the side of the filter device (18) associated with the second fluid connection (16) is cleaned by means of the fluid spray device (62), which is arranged in the second pipe arrangement (52).

## Revendications

1. Dispositif de nettoyage (10) permettant de nettoyer un système filtrant (12) qui présente un premier raccord pour fluide (14), un second raccord pour fluide (16) et un appareil formant filtre (18) qui est disposé entre le premier raccord pour fluide (14) et le second raccord pour fluide (16) et qui possède une surface sur laquelle des impuretés peuvent adhérer, comportant :
- un dispositif formant générateur (30) permettant de générer un mélange gaz-liquide, dans lequel le dispositif formant générateur (30) présente une chambre de réception (32) permettant de recevoir un liquide et un dispositif de génération de gaz sous pression (34) qui peut être raccordé à la chambre de réception (32) de telle sorte qu'une introduction du gaz à partir du dispositif de génération de gaz sous pression (34) dans la chambre de réception (32) est effectuée en dessous d'un niveau de liquide (42) dans la chambre de réception (32), vu dans la direction de centre de gravité ;
- un premier système formant tube (44) qui est raccordé au dispositif formant générateur (30) et qui présente un premier raccord de tube (46) qui peut être raccordé au premier raccord pour fluide (14) afin d'amener le mélange gaz-liquide sous pression dans le système filtrant (12) ; et
- un second système formant tube (50) qui présente un second raccord de tube (52) pouvant être raccordé au second raccord pour fluide (16) et qui est raccordé à un dispositif de collecte (54) permettant de collecter le mélange gaz-liquide amené à travers le système filtrant (12) et des impuretés emportées hors du système filtrant (12) ;
**caractérisé en ce que**
un dispositif de pulvérisation de fluide (62) est disposé dans le second système formant tube (50), lequel dispositif de pulvérisation de fluide présente au moins une buse de pulvérisation (76) qui est dirigée vers l'appareil formant filtre (18).

2. Dispositif de nettoyage selon la revendication 1, dans lequel le premier raccord de tube (46) est disposé dans le sens de la force de gravité (G) au-dessus du second raccord de tube (52), dans lequel le premier système formant tube (44) présente une section formant tube de déviation (48) qui raccorde la chambre de réception (32) du dispositif formant générateur (30) au premier raccord de tube (46) de telle sorte que la chambre de réception (32) peut être remplie de liquide avant la génération du mélange gaz-liquide, sans que le liquide n'atteigne le système filtrant (12).

3. Dispositif de nettoyage selon la revendication 2, dans lequel le premier système formant tube (44) est construit de sorte que le mélange gaz-liquide généré par le dispositif formant générateur (30) est guidé sous pression vers le haut à l'encontre de la force de gravité (G), puis à travers la section formant tube de déviation (48) et finalement vers le bas en direction du système filtrant (12).

4. Dispositif de nettoyage selon l'une des revendications 1 à 3, dans lequel le dispositif de pulvérisation de fluide (62) présente une barre de pulvérisation (74) qui s'étend transversalement à une direction longitudinale et sur laquelle est disposée une pluralité de buses de pulvérisation (76).

5. Dispositif de nettoyage selon la revendication 3 ou 4, dans lequel le dispositif de pulvérisation de fluide (62) peut tourner autour d'un axe longitudinal.

6. Dispositif de nettoyage selon l'une des revendications 3 à 5, dans lequel le second système formant tube (50) présente une section formant tube en forme de siphon (56) dans laquelle peuvent s'accumuler du fluide de pulvérisation et des impuretés qui se sont détachées de l'appareil formant filtre (18) au moyen du dispositif de pulvérisation de fluide (62).

7. Dispositif de nettoyage selon la revendication 6, dans lequel la section formant tube en forme de siphon (56) présente une évacuation (58) par l'intermédiaire de laquelle du fluide de pulvérisation et des impuretés peuvent être éliminés du second système formant tube (50).

8. Dispositif de nettoyage selon l'une des revendications 1 à 7, dans lequel au moins une section du premier système formant tube (44) peut coulisser dans une direction longitudinale afin de faciliter une insertion du système filtrant (12) entre le premier raccord de tube (46) et le second raccord de tube (52).

9. Dispositif de nettoyage selon la revendication 8, dans lequel un premier servomoteur (80) est associé au premier système formant tube (44), premier servomoteur au moyen duquel l'au moins une section du premier système formant tube (44) peut coulisser.

10. Dispositif de nettoyage selon la revendication 9, dans lequel le premier raccord de tube (46) peut être mis en place sur le premier raccord de filtre (14) d'une manière commandée par force au moyen du premier servomoteur (80).

11. Dispositif de nettoyage selon l'une des revendications 1 à 10, comportant un système de chargement (78) qui peut coulisser dans une direction transversale à un axe longitudinal afin de disposer un système filtrant (12) dans une position de nettoyage au-dessus du second raccord de tube (52).

12. Dispositif de nettoyage selon la revendication 11, dans lequel un second servomoteur (82) est associé au système de chargement (78), lequel second servomoteur peut déplacer le système de chargement (78) entre la position de nettoyage et une position de chargement.

13. Procédé permettant de nettoyer un système filtrant (12) qui présente un premier raccord pour fluide (14), un second raccord pour fluide (16) et un appareil formant filtre (18) qui est disposé entre le premier raccord pour fluide (14) et le second raccord pour fluide (16) et qui possède une surface sur laquelle des impuretés peuvent adhérer, dans lequel le procédé présente les étapes consistant à :
- disposer le système filtrant (12) dans un dispositif de nettoyage (10) selon l'une des revendications 1 à 12 de telle sorte que le second raccord pour fluide (16) est orienté vers le bas et que le premier raccord pour fluide (14) est raccordé à la chambre de réception (32) par l'intermédiaire de la section formant tube de déviation (48),
- remplir au moins partiellement la chambre de réception (32) d'un liquide, et
- générer une impulsion de nettoyage lors de laquelle du gaz provenant de l'appareil de génération de gaz sous pression (34) est amené sous pression dans la chambre de réception (32), à savoir pendant une durée inférieure à 5 secondes, de sorte qu'un mélange gaz-liquide est transmis, par l'intermédiaire d'une section formant tube de déviation (48), par le haut dans l'appareil formant filtre (18), à travers l'appareil formant filtre (18) et hors du second raccord pour fluide (16).

14. Procédé selon la revendication 13, dans lequel, avant la génération de l'impulsion de nettoyage, le côté de l'appareil formant filtre (18) associé au second raccord pour fluide (16) est nettoyé au moyen du dispositif de pulvérisation de fluide (62) qui est disposé dans le second système formant tube (52).
